# EUROPEAN PATENT APPLICATION

(11) **EP 4 174 605 A1**
(43) Date of publication of application: **03.05.2023**
(21) Application number: 22204089.1
(22) Date of filing: 27.10.2022
(51) Int. Cl.: G05B 23/02

(54) **PLANT PERFORMANCE MANAGEMENT METHOD, PLANT PERFORMANCE MANAGEMENT APPARATUS, AND PLANT PERFORMANCE MANAGEMENT PROGRAM**

(30) Priority: 29.10.2021 JP 2021178235
(71) Applicant: Yokogawa Electric Corporation, Musashino-shi, Tokyo 180-8750 (JP)
(72) Inventor: Kawazoe, Seiki, Chuo-ku, Fukuoka, 810-0004 (JP); Yasumura, Kohei, Musashino-shi, Tokyo, 180-8750 (JP); Sato, Teppei, Musashino-shi, Tokyo, 180-8750 (JP)
(74) Representative: Hoffmann Eitle

(57) **Abstract**

A plant performance management method includes a step of evaluating performance of a plant (10) based on a relationship between at least two items of data from operating data and a step of analyzing a cause that makes the performance of the plant (10) abnormal based on the operating data in a case in which the performance of the plant (10) is evaluated as abnormal.

## Description

### TECHNICAL FIELD

The present disclosure relates to a plant performance management method, a plant performance management apparatus, and a plant performance management program.

### BACKGROUND

Methods are known for managing the performance of geothermal plants by monitoring the mutual validity of operating data. For example, see Non-Patent Literature (NPL) 1.

### CITATION LIST

### Non-patent Literature

NPL 1: Geothermal Energy Handbook Publication Committee (Eds), The Geothermal Research Society of Japan. "Geothermal Energy Handbook". Ohmsha, February 20, 2014. "Chapter 5: Operation of Geothermal Power Plants", p. 569

### SUMMARY

Demand exists for efficient management of plant performance.

It would be helpful to provide a plant performance management method, a plant performance management apparatus, and a plant performance management program that can efficiently manage plant performance.

A plant performance management method according to an embodiment includes a step of evaluating performance of a plant based on a relationship between at least two items of data from operating data, and a step of analyzing a cause that makes the performance of the plant abnormal based on the operating data in a case in which the performance of the plant is evaluated as abnormal. With this configuration, causes of abnormality are analyzed only when the performance of the plant is evaluated as abnormal. Consequently, the plant performance is efficiently managed.

In the step of evaluating the performance of the plant in the plant performance management method according to an embodiment, the performance of the plant may be evaluated based on change over time in at least one item of data from the operating data. With this configuration, signs that the plant performance will become abnormal can be detected. Consequently, the plant performance is efficiently managed.

The plant performance management method according to an embodiment may further include a step of evaluating whether at least one item of data from the operating data is abnormal in a case in which the performance of the plant is evaluated as normal. With this configuration, measures are taken for the plant at an early stage in a case in which an abnormality in the operating data is detected. Consequently, the plant performance is efficiently managed.

In the step of evaluating the performance of the plant in the plant performance management method according to an embodiment, the performance of the plant may be evaluated based on a relationship among three items of data from the operating data. With this configuration, the correlation between the combination of items for evaluation and the plant performance can be increased. As a result, the accuracy of the evaluation of plant performance increases.

In the step of analyzing a cause that makes the performance of the plant abnormal in the plant performance management method according to an embodiment, the operating data may be classified as normal, too high, or too low for each data set among a plurality of data sets including two items of data from the operating data. The cause that makes the performance of the plant abnormal may be analyzed based on a combination of classification results for each data set. With this configuration, the causes of abnormality of the plant can be analyzed in a simplified manner. Consequently, the load for operations to analyze the cause of abnormality can be reduced. The plant performance is also efficiently managed.

The plant performance management method according to an embodiment may further include a step of displaying a graph representing a relationship between a combination of at least a portion of items of data from the operating data. With this configuration, the process of evaluating plant performance and analyzing causes of abnormality can be represented visually for the user. Consequently, the user can accept the evaluation and analysis results with piece of mind.

The plant performance management method according to an embodiment may further include a step of estimating losses occurring in the plant based on analysis results of the cause that makes the performance of the plant abnormal. With this configuration, it can be easily determined whether to perform maintenance on the plant. Consequently, the plant performance is efficiently managed.

The plant performance management method according to an embodiment may further include a step of generating a maintenance plan for the plant based on a result of estimating the losses. With this configuration, the amount of generated power is maximized. Consequently, the plant performance is efficiently managed.

A plant performance management apparatus according to an embodiment performs the aforementioned plant performance management method. With this configuration, causes of abnormality are analyzed only when the performance of the plant is evaluated as abnormal. Consequently, the plant performance is efficiently managed.

A plant performance management program according to an embodiment is configured to cause a computer to perform the aforementioned plant performance management method. With this configuration, causes of abnormality are analyzed only when the performance of the plant is evaluated as abnormal. Consequently, the plant performance is efficiently managed.

According to the present disclosure, a plant performance management method, a plant performance management apparatus, and a plant performance management program that can efficiently manage plant performance can be provided.

### BRIEF DESCRIPTION OF THE DRAWINGS

In the accompanying drawings:
FIG. 1 is a flowchart illustrating a plant performance management method according to a comparative example;
FIG. 2 is a block diagram illustrating an example configuration of a plant management system according to an embodiment;
FIG. 3 is a flowchart illustrating a plant performance management method according to an embodiment;
FIG. 4 is a graph depicting an example of the relationship between two items of data used to evaluate plant performance;
FIG. 5 is a graph depicting an example of the relationship among three items of data used to evaluate plant performance;
FIG. 6 is a graph depicting an example of a plurality of relationships between two items of data used in a case in which plant performance is analyzed as having declined due to a decline in condenser performance;
FIG. 7 is a graph depicting an example of a plurality of relationships between two items of data used in a case in which a pressure gauge that measures condenser pressure is analyzed as being abnormal;
FIG. 8 is a graph depicting an example of a plurality of relationships between two items of data used in a case in which plant performance is analyzed as having declined due to a decline in condenser performance and cooling tower performance;
FIG. 9 is a graph depicting an example of a plurality of relationships between two items of data used in a case in which plant performance is analyzed as having declined due to a decrease in the amount of water circulating between the condenser and the cooling tower;
FIG. 10 is a graph illustrating a case in which operating data for a future period is estimated to be plotted outside the normal range based on change over time in operating data;
FIG. 11 is a graph illustrating an example of four data sets including two items of data among a plurality of items of operating data; and
FIG. 12 is an example of a table associating plant status with a combination of classification results for each data set.

### DETAILED DESCRIPTION

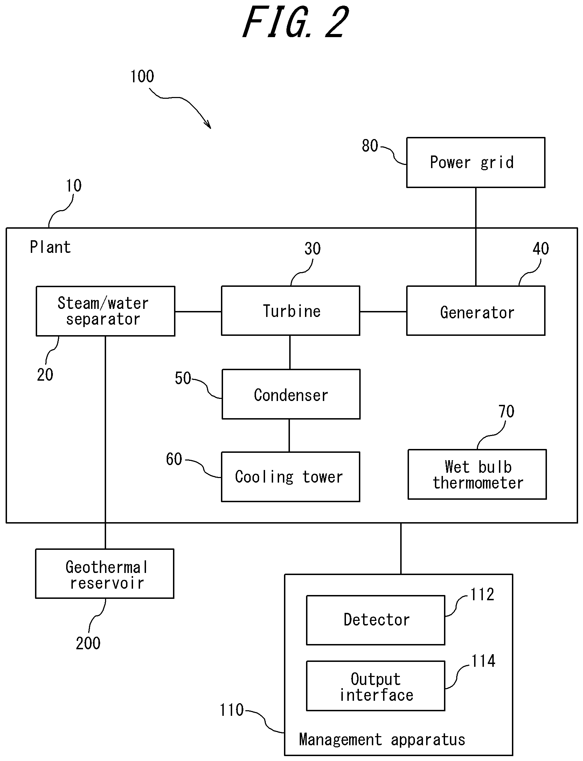

A plant performance management system 100 according to an embodiment of the present disclosure (see FIG. 2) manages the performance of a plant 10 (see FIG. 2), such as a geothermal power plant. An embodiment of the plant performance management system 100 for managing the performance of the plant 10 is described below in comparison with a system according to a comparative example.

### (Comparative Example)

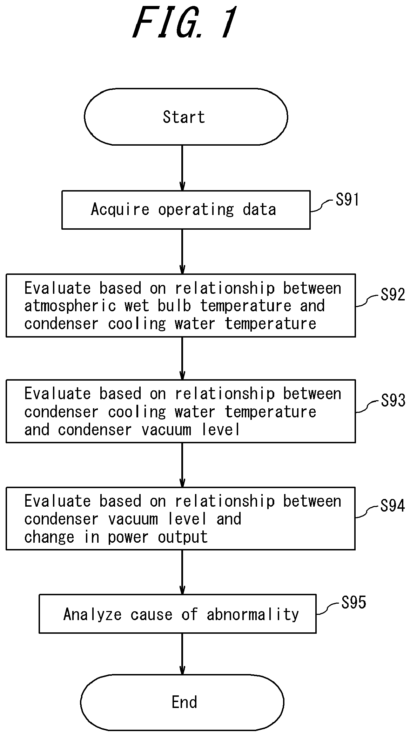

The system according to a comparative example manages the performance of the plant 10 by performing a plant performance management method including the example procedures illustrated in FIG. 1. The system according to the comparative example acquires operating data from the plant 10 (step S91). The operating data includes the atmospheric wet bulb temperature, the cooling water temperature of a condenser 50, the vacuum level of the condenser 50, and the power output by the generator 40. The system according to the comparative example evaluates the performance of the cooling tower 60 based on the relationship between the atmospheric wet bulb temperature and the cooling water temperature of the condenser 50 (step S92). The system according to the comparative example evaluates the performance of the condenser 50 based on the relationship between the cooling water temperature of the condenser 50 and the vacuum level of the condenser 50 (step S93). The system according to the comparative example evaluates the performance of a turbine 30 and the generator 40 based on the relationship between the vacuum level of the condenser 50 and the change in power output (step S94). The system according to the comparative example analyzes the cause that makes the performance of the plant 10 abnormal based on the evaluation results of the performance of the plant 10 acquired by steps S92 through S94 (step S95).

As described above, the system according to the comparative example evaluates the performance of the plant 10 based on a plurality of combinations of each item of the operating data and analyzes the cause that makes the performance of the plant 10 abnormal based on the evaluation results. Here, in the case of evaluating the performance of the plant 10 based on a plurality of combinations, many procedures are necessary. Consequently, the load for evaluation can be high. In other words, the efficiency of the work to manage the performance of the plant 10 can decrease.

In the present disclosure, a plant performance management system 100 that can efficiently manage the performance of the plant 10 is described.

### (Embodiment of the Present Disclosure)

As illustrated in FIG. 2, a plant performance management system 100 according to an embodiment of the present disclosure includes a plant 10 and a management apparatus 110. The management apparatus 110 is also referred to as a plant performance management apparatus.

In the present embodiment, the plant 10 is assumed to be configured as a geothermal power plant that generates electricity using steam supplied from a geothermal reservoir 200 via a steam/water separator 20. The plant 10 includes the steam/water separator 20, a turbine 30, a generator 40, a condenser 50, a cooling tower 60, and a wet bulb thermometer 70. The plant 10 is not limited to being a geothermal power plant and may be configured as other facilities such as a geothermal binary power plant or thermal power plant.

The management apparatus 110 includes a detector 112 and an output interface 114. The detector 112 acquires operating data of the plant 10. The operating data of the plant 10 includes, for example, the output of the generator 40, the temperature of the cooling water at the inlet of the condenser 50, the vacuum level of the condenser 50, the atmospheric wet bulb temperature measured by the wet bulb thermometer 70, or the like. The operating data of the plant 10 is not limited to these examples and may include various data such as the temperature of the cooling water at the outlet of the cooling tower 60 or the amount of cooling water circulating between the condenser 50 and the cooling tower 60. The management apparatus 110 may further include a communication module configured to communicate with the plant 10. The communication module may be capable of communicating with the plant 10 in a wired or wireless manner.

The detector 112 evaluates the performance of the plant 10 based on the operating data of the plant 10 and analyzes the cause that makes the performance of the plant 10 abnormal. The detector 112 may output the evaluation results of the performance or the analysis results of the causes of abnormality via the output interface 114.

The detector 112 may, for example, be configured by a processor such as a central processing unit (CPU). The detector 112 may implement predetermined functions by having the processor execute a predetermined program. The detector 112 may include a memory. The memory may store various information used for operations of the detector 112, programs for implementing the functions of the detector 112, and the like. The memory may function as a working memory of the detector 112. The memory may, for example, be a semiconductor memory. The memory may be included in the detector 112 or may be configured as a separate entity from the detector 112.

The output interface 114 outputs information acquired from the detector 112. The output interface 114 may notify a user of information by outputting visual information, such as characters, graphics, or images, directly or via an external apparatus or the like. The output interface 114 may include a display device and may be connected to the display device in a wired or wireless manner. The display device may include various types of displays, such as a liquid crystal display. The output interface 114 may notify the user of information by outputting audio information, such as sound, directly or via an external apparatus or the like. The output interface 114 may include an audio output device, such as a speaker, and may be connected to the audio output device in a wired or wireless manner. The output interface 114 may notify the user of information not only with visual information or audio information but also by outputting, directly or via an external apparatus or the like, information that the user is capable of perceiving with a different sense.

### (Example Flowchart of Plant Performance Management Method)

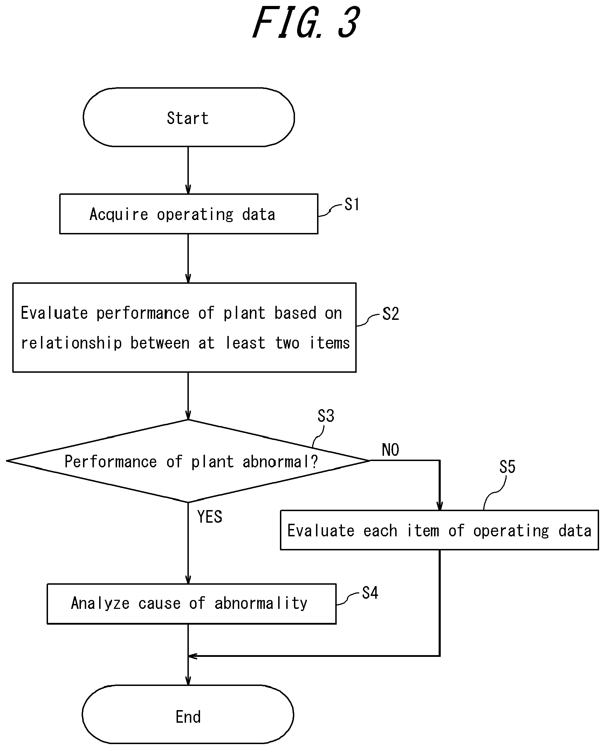

The detector 112 of the management apparatus 110 may perform a plant performance management method that includes the steps of the flowchart illustrated in FIG. 3. The plant performance management method may be implemented as a plant performance management program executed by the processor of the detector 112 or the like. The plant performance management program may be stored on a non-transitory computer readable medium. The plant performance management program may cause the computer executing the plant performance management program to function as the management apparatus 110.

The detector 112 acquires the operating data (step S1).

The detector 112 evaluates the performance of the plant 10 based on the relationship between at least two items of data from the operating data (step S2).

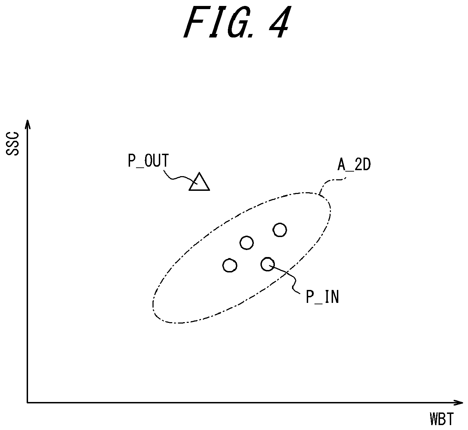

The detector 112 may evaluate whether the performance of the plant 10 is normal or abnormal based on the relationship between the atmospheric wet bulb temperature (WBT) and the specific steam consumption (SSC), as illustrated by the two-dimensional graph in FIG. 4, for example. In the graph in FIG. 4, the vertical axis corresponds to SSC. The horizontal axis corresponds to WBT.

In the graph in FIG. 4, the WBT and SSC data obtained at the plant 10 at a certain point in time is plotted. A boundary A_2D of the two-dimensional region where the data is plotted in a case in which the performance of the plant 10 is normal is indicated by a dashed dotted line. The region where data is plotted in a case in which the performance of the plant 10 is normal is also referred to as the normal region. In a case in which a plotted point of data is located within the normal region, as indicated by the white circle, the performance of the plant 10 is evaluated as being normal. In a case in which a plotted point of data is located outside the normal region, as indicated by the white triangle, the performance of the plant 10 is evaluated as being abnormal.

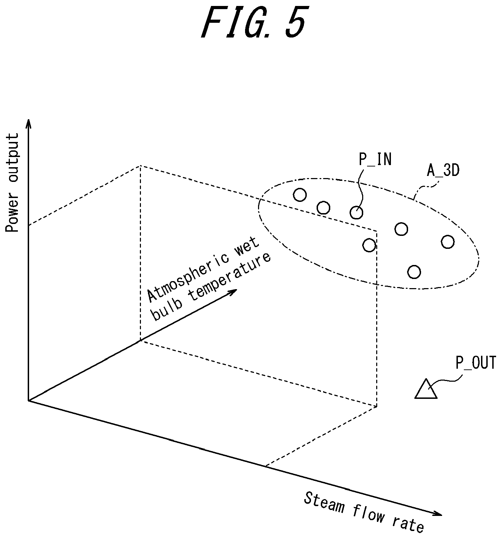

The detector 112 may evaluate whether the performance of the plant 10 is normal or abnormal based on the relationship among steam flow rate, WBT, and power output, as illustrated by the three-dimensional graph in FIG. 5, for example. In other words, the detector 112 may evaluate the performance of the plant 10 based on the relationship among three items of data from the operating data. In the graph of FIG. 5, the axis in the height direction of the three-dimensional graph corresponds to the power output. The two axes corresponding to the plane of the three-dimensional graph respectively correspond to the steam flow rate and the atmospheric wet bulb temperature.

In the graph in FIG. 5, the data for the steam flow rate, atmospheric wet bulb temperature, and power output obtained at the plant 10 at a certain point in time are plotted. A boundary A_3D of the three-dimensional region where the data is plotted in a case in which the performance of the plant 10 is normal is indicated by a dashed dotted line. In a case in which a plotted point of data is located within the normal region, as indicated by the white circle, the performance of the plant 10 is evaluated as being normal. In a case in which a plotted point of data is located outside the normal region, as indicated by the white triangle, the performance of the plant 10 is evaluated as being abnormal.

The detector 112 may evaluate whether the performance of the plant 10 is normal or abnormal based on the relationship among the condenser vacuum level, the steam flow rate, and the power output.

The correlation between the combination of items for evaluation and the performance of the plant 10 can be increased by increasing the number of items of operating data used to evaluate the performance of the plant 10. As a result, the accuracy of the evaluation of performance of the plant 10 can increase.

Returning to the flowchart in FIG. 3, the detector 112 determines whether the performance of the plant 10 is abnormal (step S3). In a case in which the performance of the plant 10 is abnormal (step S3: YES), the detector 112 analyzes the cause of the abnormality based on a plurality of graphs representing the relationship between the two items (step S4). For example, the detector 112 may analyze the cause of the abnormality based on the relationship between the WBT and the SSC, the relationship between the WBT and the temperature of the cooling water entering the condenser 50, the relationship between the condenser pressure and the temperature of the cooling water entering the condenser 50, and the relationship between the condenser pressure and the power output.

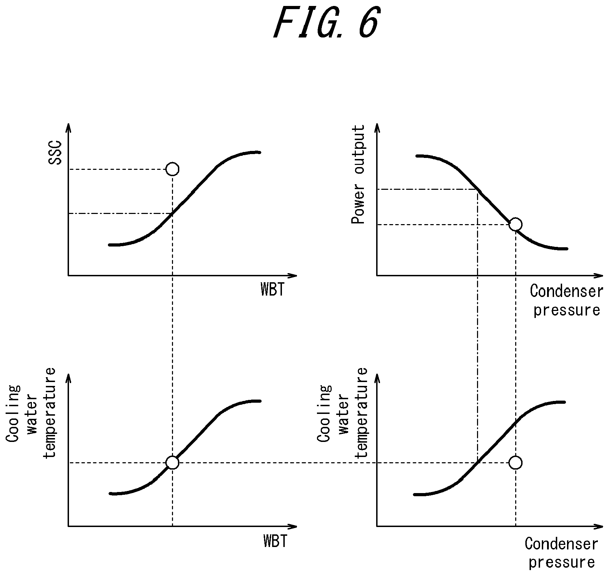

The detector 112 may analyze the cause of the abnormality using graphs representing the respective relationships, as illustrated in FIG. 6. The upper-left graph in FIG. 6 represents the relationship between WBT (horizontal axis) and SSC (vertical axis). The lower-left graph in FIG. 6 represents the relationship between WBT (horizontal axis) and cooling water temperature (vertical axis). The lower-right graph in FIG. 6 represents the relationship between condenser pressure (horizontal axis) and cooling water temperature (vertical axis). The upper-right graph in FIG. 6 represents the relationship between condenser pressure (horizontal axis) and power output (vertical axis).

The solid curves depicted in each graph in FIG. 6 represent the curves that approximate the region where data is plotted in a case in which the performance of the plant 10 is normal. In other words, in FIG. 6, the normal region is represented by a curve as an approximation, but the normal region is not actually limited to being linear. A method of analyzing causes of abnormality is described below assuming that, in a case in which two items of data from the operating data acquired from a plant 10 with normal performance are plotted on a graph, the plotted points lie on an approximate curve of the normal region.

In the graph representing the relationship between WBT and SSC in the upper left of FIG. 6, data is plotted by a white circle at a position outside the approximate curve. In addition, a dashed perpendicular line is drawn from the white circle to each axis. Specifically, the value of SSC at the point plotted by the white circle is greater than the value of SSC corresponding to the value of the same WBT for the case in which the performance of the plant 10 is normal (the value at the point where the solid curve and the dashed line intersect). The detector 112 evaluates that the performance of the plant 10 has declined based on the upper-left graph.

In the upper-left graph, a dashed dotted perpendicular line is drawn to the vertical axis from the point where the approximate curve and the perpendicular dashed line intersect. The value of SSC represented by the intersection of the dashed dotted line and the vertical axis corresponds to the value of SSC in the normal state. The actual value of SSC represented by the perpendicular line (horizontal dashed line) drawn to the vertical axis from the point where the white circle is plotted is greater than the value of SSC in the normal state.

The detector 112 evaluates the performance of the plant 10 based on the upper-left graph as the procedure in step S3 of FIG. 3. The detector 112 performs the procedure corresponding to the analysis of the causes of the abnormality in step S4 of FIG. 3 below.

In the graph representing the relationship between WBT and the cooling water temperature in the lower left of FIG. 6, data is plotted by a white circle on the approximate curve. In addition, a dashed perpendicular line is drawn from the white circle to each axis. The detector 112 evaluates that the cooling water temperature is normal based on the relationship between WBT and the cooling water temperature.

In the graph representing the relationship between the condenser pressure and the cooling water temperature in the lower right of FIG. 6, data is plotted by a white circle at a position outside the approximate curve. In addition, a dashed perpendicular line is drawn from the white circle to each axis. Specifically, the value of the condenser pressure at the point plotted by the white circle is greater than the value of the condenser pressure corresponding to the value of the same cooling water temperature for the case in which the performance of the plant 10 is normal (the value at the point where the approximate curve and the horizontal dashed line intersect). The detector 112 evaluates that the condenser pressure is abnormal based on the lower-right graph.

In the graph representing the relationship between the condenser pressure and the power output in the upper right of FIG. 6, data is plotted by a white circle on the approximate curve. In addition, a dashed perpendicular line is drawn from the white circle to each axis. The detector 112 evaluates that the turbine performance is normal based on the relationship between condenser pressure and power output.

The lower-right graph and the upper-right graph in FIG. 6 have a common horizontal axis representing the condenser pressure. In the lower-right graph, the value of the condenser pressure at the point of intersection between the approximate curve and the horizontal dashed line corresponds to the value of the condenser pressure in the normal state. The value of the condenser pressure in the normal state, which is common to the lower-right graph and the upper-right graph, is represented as the intersection between the perpendicular dashed dotted line and the horizontal axis representing the condenser pressure. In the upper-right graph, the value of the power output at the point of intersection between the approximate curve and the perpendicular dashed dotted line corresponds to the value of the power output in the normal state. In the upper-right graph of FIG. 6, the value of the actual power output is smaller than the value of the power output in the normal state.

As described above, the detector 112 can analyze the cause behind the performance of the plant 10 becoming abnormal based on the relationship between the two items of data in the procedure of step S4. After executing the procedure of step S4, the detector 112 ends execution of the procedures of the flowchart in FIG. 3.

Returning to the flowchart in FIG. 3, in a case in which the performance of the plant 10 is not abnormal (step S3: NO), that is, in a case in which the performance of the plant 10 is normal, the detector 112 evaluates each item of the operating data (step S5). In other words, the detector 112 evaluates whether at least one item of data from the operating data is abnormal. For example, the detector 112 may evaluate whether the measured value is normal in the measurement apparatus or sensor that measures each item of the operating data. With this configuration, measures can be taken for the plant 10 before the performance of the plant 10 becomes abnormal in a case in which an abnormality in the operating data is detected at an early stage. Consequently, the plant performance is efficiently managed. After executing the procedure of step S5, the detector 112 ends execution of the procedures of the flowchart in FIG. 3.

As described above, in the plant performance management system 100 according to the present embodiment, the detector 112 of the management apparatus 110 evaluates whether the performance of the plant 10 is normal or abnormal based on the relationship of a combination of at least two items of data from the operating data. The detector 112 analyzes the cause of abnormality based on the evaluation results. By the evaluation being based on the relationship of one combination of data, the performance of the plant 10 can easily be evaluated. Also, by analysis of the cause of abnormality in a case in which the performance of the plant 10 is evaluated as being abnormal, the load of the process to analyze the cause of abnormality can be reduced compared to a case in which the causes of abnormality are analyzed each time the operating data is evaluated. Consequently, the performance of the plant 10 can be efficiently managed.

### (Other Embodiments)

### <Example of Analysis of Cause of Abnormality>

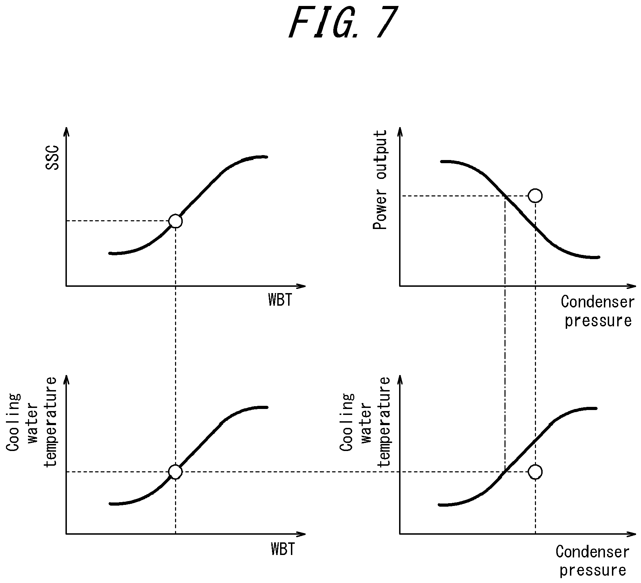

Other examples of the analysis of the cause of abnormality in the procedure of step S4 in FIG. 3 are described with reference to FIGS. 7, 8, and 9.

### «Case of Normal Performance of Plant 10 and One Abnormal Item»

In the graph representing the relationship between WBT and SSC in the upper left of FIG. 7, data is plotted by a white circle at a position on the approximate curve. In addition, a dashed perpendicular line is drawn from the white circle to each axis. In this case, the detector 112 evaluates that the performance of the plant 10 is normal based on the upper-left graph. The detector 112 evaluates the performance of the plant 10 based on the upper-left graph as the procedure in step S3 of FIG. 3. In a case in which the performance of the plant 10 is evaluated as normal, the detector 112 performs the procedure below corresponding to the evaluation of each item of the operating data in step S5 of FIG. 3.

In the graph representing the relationship between WBT and the cooling water temperature in the lower left of FIG. 7, data is plotted by a white circle on the approximate curve. In addition, a dashed perpendicular line is drawn from the white circle to each axis. In this case, the detector 112 evaluates that the cooling water temperature is normal based on the relationship between WBT and the cooling water temperature.

In the graph representing the relationship between the condenser pressure and the cooling water temperature in the lower right of FIG. 7, data is plotted by a white circle at a position outside the approximate curve. In addition, a dashed perpendicular line is drawn from the white circle to each axis. Specifically, the value of the condenser pressure at the point plotted by the white circle is greater than the value of the condenser pressure corresponding to the value of the same cooling water temperature for the case in which the performance of the plant 10 is normal (the value at the point where the approximate curve and the horizontal dashed line intersect). In this case, the condenser pressure might be abnormal.

In the graph representing the relationship between the condenser pressure and the power output in the upper right of FIG. 7, data is plotted by a white circle at a position outside the approximate curve. In addition, a dashed perpendicular line is drawn from the white circle to each axis. In this case, the turbine performance might be abnormal.

Here, the lower-right graph and the upper-right graph in FIG. 7 have a common horizontal axis representing the condenser pressure. In the lower-right graph, the value of the condenser pressure at the point of intersection between the approximate curve and the horizontal dashed line corresponds to the value of the condenser pressure in the normal state. The value of the condenser pressure in the normal state, which is common to the lower-right graph and the upper-right graph, is represented as the intersection between the perpendicular dashed dotted line and the horizontal axis representing the condenser pressure. In the upper-right graph, the value of the power output at the point of intersection between the approximate curve and the perpendicular dashed dotted line corresponds to the value of the power output in the normal state. In the upper-right graph of FIG. 7, the value of the actual power output matches the value of the power output in the normal state. In this case, it is likely that only the value of the condenser pressure is measured at a value greater than the normal value. Therefore, the detector 112 evaluates the measured value of the pressure of the condenser 50 as abnormal.

### «Case of Plurality of Abnormal Items»

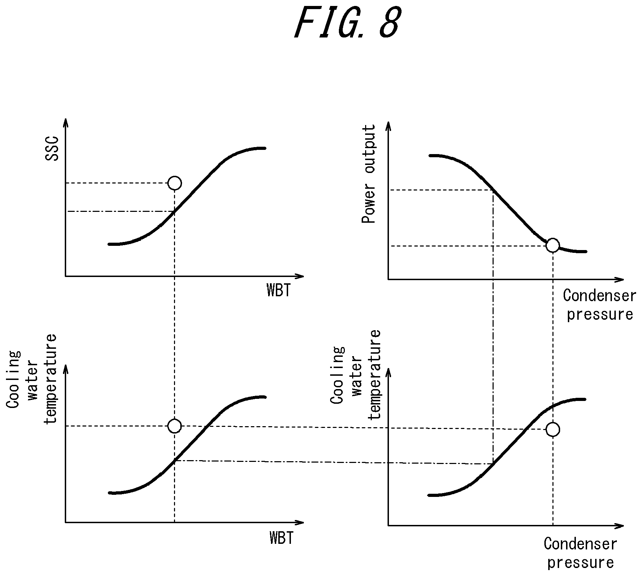

In the graph representing the relationship between WBT and SSC in the upper left of FIG. 8, data is plotted by a white circle at a position outside the approximate curve. In addition, a dashed perpendicular line is drawn from the white circle to each axis. In this case, the detector 112 evaluates that the performance of the plant 10 is abnormal based on the upper-left graph. The detector 112 evaluates the performance of the plant 10 based on the upper-left graph as the procedure in step S3 of FIG. 3. In a case in which the performance of the plant 10 is evaluated as abnormal, the detector 112 performs the procedure corresponding to the analysis of the causes of the abnormality in step S4 of FIG. 3 below.

In the upper-left graph, a dashed dotted perpendicular line is drawn to the vertical axis from the point where the approximate curve and the perpendicular dashed line intersect. The value of SSC represented by the intersection of the dashed dotted line and the vertical axis corresponds to the value of SSC in the normal state. The actual value of SSC represented by the perpendicular line (horizontal dashed line) drawn to the vertical axis from the point where the white circle is plotted is greater than the value of SSC in the normal state.

In the graph representing the relationship between WBT and the cooling water temperature in the lower left of FIG. 8, data is plotted by a white circle at a position outside the approximate curve. In addition, a dashed perpendicular line is drawn from the white circle to each axis. Specifically, the value of the cooling water temperature at the point plotted by the white circle is greater than the value of the cooling water temperature corresponding to the value of the same WBT for the case in which the performance of the plant 10 is normal (the value at the point where the approximate curve and the perpendicular dashed line intersect). In this case, the cooling water temperature might be abnormal. In other words, the cooling tower performance might be abnormal.

In the graph representing the relationship between the condenser pressure and the cooling water temperature in the lower right of FIG. 8, data is plotted by a white circle at a position outside the approximate curve. In addition, a dashed perpendicular line is drawn from the white circle to each axis. Specifically, the value of the condenser pressure at the point plotted by the white circle is greater than the value of the condenser pressure corresponding to the value of the same cooling water temperature for the case in which the performance of the plant 10 is normal (the value at the point where the approximate curve and the horizontal dashed line intersect). In this case, the condenser pressure might be abnormal.

In the graph representing the relationship between the condenser pressure and the power output in the upper right of FIG. 8, data is plotted by a white circle on the approximate curve. In addition, a dashed perpendicular line is drawn from the white circle to each axis. In this case, the detector 112 evaluates that the turbine performance is normal based on the relationship between the condenser pressure and the power output.

Here, the lower-left graph and the lower-right graph in FIG. 8 have a common vertical axis representing the cooling water temperature. In the lower-left graph, the value of the cooling water temperature at the point of intersection between the approximate curve and the perpendicular dashed line corresponds to the value of the cooling water temperature in the normal state. The value of the cooling water temperature in the normal state, which is common to the lower-left graph and the lower-right graph, is represented as the intersection between the horizontal dashed dotted line and the horizontal axis representing the cooling water temperature. In the lower-right graph, the value of the condenser pressure at the point of intersection between the approximate curve and the horizontal dashed dotted line corresponds to the value of the condenser pressure in the normal state. In the lower-right graph of FIG. 8, the actual value of the condenser pressure is greater than the value of the condenser pressure value in the normal state.

Furthermore, the lower-right graph and the upper-right graph in FIG. 8 have a common horizontal axis representing the condenser pressure. The value of the condenser pressure in the normal state, which is common to the lower-right graph and the upper-right graph, is represented as the intersection between the perpendicular dashed dotted line and the horizontal axis representing the condenser pressure. In the upper-right graph, the value of the power output at the point of intersection between the approximate curve and the perpendicular dashed dotted line corresponds to the value of the power output in the normal state. In the upper-right graph of FIG. 8, the value of the actual power output is smaller than the value of the power output in the normal state.

Given that the power output is actually reduced in the case illustrated in FIG. 8, it is likely that both the cooling water temperature and the condenser pressure are abnormal. In other words, both the performance of the cooling tower 60 and the performance of the condenser 50 are likely to have declined. Therefore, the detector 112 evaluates the cooling tower 60 and the condenser 50 as abnormal.

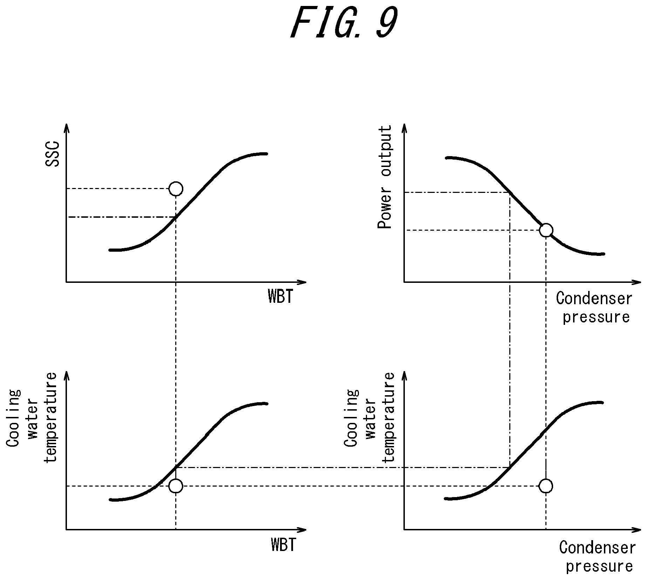

Another example of causes of abnormality in a case in which a plurality of items are found to be abnormal is described with reference to FIG. 9.

In the graph representing the relationship between WBT and SSC in the upper left of FIG. 9, data is plotted by a white circle at a position outside the approximate curve. In addition, a dashed perpendicular line is drawn from the white circle to each axis. In this case, the detector 112 evaluates that the performance of the plant 10 is abnormal based on the upper-left graph. The detector 112 evaluates the performance of the plant 10 based on the upper-left graph as the procedure in step S3 of FIG. 3. In a case in which the performance of the plant 10 is evaluated as abnormal, the detector 112 performs the procedure corresponding to the analysis of the causes of the abnormality in step S4 of FIG. 3 below.

In the upper-left graph, a dashed dotted perpendicular line is drawn to the vertical axis from the point where the approximate curve and the perpendicular dashed line intersect. The value of SSC represented by the intersection of the dashed dotted line and the vertical axis corresponds to the value of SSC in the normal state. The actual value of SSC represented by the perpendicular line (horizontal dashed line) drawn to the vertical axis from the point where the white circle is plotted is greater than the value of SSC in the normal state.

In the graph representing the relationship between WBT and the cooling water temperature in the lower left of FIG. 9, data is plotted by a white circle at a position outside the approximate curve. In addition, a dashed perpendicular line is drawn from the white circle to each axis. Specifically, the value of the cooling water temperature at the point plotted by the white circle is less than the value of the cooling water temperature corresponding to the value of the same WBT for the case in which the performance of the plant 10 is normal (the value at the point where the approximate curve and the perpendicular dashed line intersect). In this case, the cooling water temperature is instead lower than the temperature in the normal state. Therefore, the performance of the cooling tower 60 might be improved.

In the graph representing the relationship between the condenser pressure and the cooling water temperature in the lower right of FIG. 9, data is plotted by a white circle at a position outside the approximate curve. In addition, a dashed perpendicular line is drawn from the white circle to each axis. Specifically, the value of the condenser pressure at the point plotted by the white circle is greater than the value of the condenser pressure corresponding to the value of the same cooling water temperature for the case in which the performance of the plant 10 is normal (the value at the point where the approximate curve and the horizontal dashed line intersect). In this case, the condenser pressure might be abnormal. In other words, the performance of the condenser 50 may have declined.

In the graph representing the relationship between the condenser pressure and the power output in the upper right of FIG. 9, data is plotted by a white circle on the approximate curve. In addition, a dashed perpendicular line is drawn from the white circle to each axis. In this case, the detector 112 evaluates that the turbine performance is normal based on the relationship between the condenser pressure and the power output.

Here, the lower-left graph and the lower-right graph in FIG. 9 have a common vertical axis representing the cooling water temperature. In the lower-left graph, the value of the cooling water temperature at the point of intersection between the approximate curve and the perpendicular dashed line corresponds to the value of the cooling water temperature in the normal state. The value of the cooling water temperature in the normal state, which is common to the lower-left graph and the lower-right graph, is represented as the intersection between the horizontal dashed dotted line and the horizontal axis representing the cooling water temperature. In the lower-right graph, the value of the condenser pressure at the point of intersection between the approximate curve and the horizontal dashed dotted line corresponds to the value of the condenser pressure in the normal state. In the lower-right graph of FIG. 9, the actual value of the condenser pressure is greater than the value of the condenser pressure value in the normal state.

Furthermore, the lower-right graph and the upper-right graph in FIG. 9 have a common horizontal axis representing the condenser pressure. The value of the condenser pressure in the normal state, which is common to the lower-right graph and the upper-right graph, is represented as the intersection between the perpendicular dashed dotted line and the horizontal axis representing the condenser pressure. In the upper-right graph, the value of the power output at the point of intersection between the approximate curve and the perpendicular dashed dotted line corresponds to the value of the power output in the normal state. In the upper-right graph of FIG. 9, the value of the actual power output is smaller than the value of the power output in the normal state.

Given that the power output is actually reduced in the case illustrated in FIG. 9, some kind of abnormality may have occurred in the plant 10. Here, the detector 112 can estimate that the performance of the cooling tower 60 has improved. On the other hand, the detector 112 can estimate that the performance of the condenser 50 has declined. Based on these two events, the detector 112 can evaluate that the amount of water circulating between the condenser 50 and the cooling tower 60 has likely decreased.

### <<Summary>>

As described above, the management apparatus 110 according to the present embodiment can generate combinations of at least two items of operating data and analyze various causes of abnormality based on a plurality of combinations.

### <Performance Evaluation Based on Change Over Time in Operating Data>

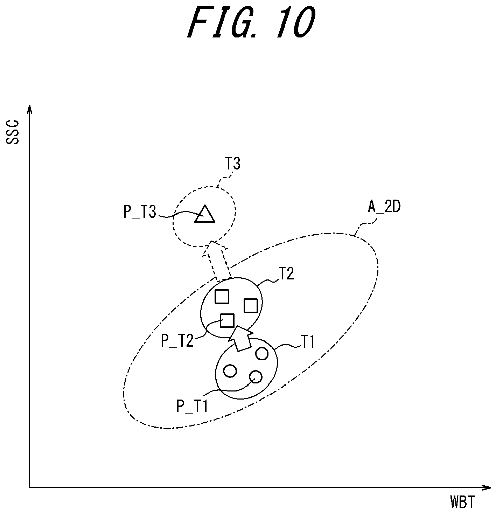

The detector 112 may evaluate the performance of the plant 10 based further on the change over time in at least one item of data from the operating data. For example, as illustrated in FIG. 10, in the graph representing the relationship between WBT and SSC, multiple operating data of the plant 10 obtained during a first period are plotted as white circles labeled first data P_T1. The plotted first data P_T1 is classified into a group surrounded by a solid oval represented as T1. Furthermore, multiple operating data of the plant 10 obtained in a second period after the first period are plotted as white rectangles labeled second data P_T2. The plotted second data P_T2 is classified into a group surrounded by a solid oval represented as T2.

In the graph in FIG. 10, the vertical axis represents SSC, and the horizontal axis represents WBT. The graph in FIG. 10 illustrates the change over time in SSC and WBT in the operating data when the period progresses from the first period to the second period. The operating data of the plant 10 obtained in the first and second periods is located within the normal region surrounded by the boundary A_2D. Therefore, the detector 112 evaluates the performance of the plant 10 as normal.

Based on the change in the positions where the operating data is plotted when progressing from the first period to the second period, the detector 112 estimates the position where the operating data of the plant 10, to be obtained in a third period after the second period, will be plotted. In the graph in FIG. 10, the data estimated as the operating data of the plant 10 to be obtained in the third period is plotted as third data P_T3. The plotted third data P_T3 is classified into a group surrounded by a dashed oval represented as T3.

In a case in which the operating data of the plant 10 estimated to be obtained in the third period is located outside the normal region surrounded by the boundary A_2D, the detector 112 can predict that the performance of the plant 10 will become abnormal when the period progresses to the future third period. Before the period progresses to the future third period, the detector 112 may output the prediction result that the performance of the plant 10 will become abnormal.

The detector 112 may set the period for checking the change over time in the operating data in units of days, weeks, months, or years, for example, or in units of seconds, minutes, or hours.

As described above, even in a case in which the plot of operating data obtained from the plant 10 at a present or past period is located within the normal range, the management apparatus 110 can estimate that the plot of operating data at a future time or period will be out of the normal range based on the trend of the change over time in the operating data. In other words, the management apparatus 110 can detect signs that the performance of the plant 10 will become abnormal. Detection of signs that the performance of the plant 10 will become abnormal allows action to be taken for the plant 10 at an early stage. Consequently, the plant performance is efficiently managed.

### <Performance Evaluation Based on Classification of Plot Position>

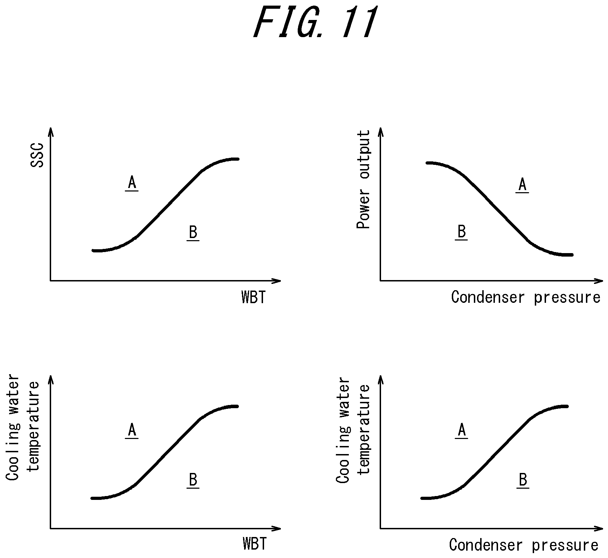

The detector 112 may generate a data set that includes two items of data from the plurality of items in the operating data. The detector 112 may generate a plurality of data sets. The detector 112 may generate a graph for each of the plurality of data sets, as illustrated in FIG. 11, and may set a range in the graph that includes positions such that the performance of the plant 10 can be evaluated as normal when the operating data is plotted at those positions. The upper-left graph in FIG. 11 represents the relationship between WBT (horizontal axis) and SSC (vertical axis). The lower-left graph in FIG. 11 represents the relationship between WBT (horizontal axis) and cooling water temperature (vertical axis). The lower-right graph in FIG. 11 represents the relationship between condenser pressure (horizontal axis) and cooling water temperature (vertical axis). The upper-right graph in FIG. 11 represents the relationship between condenser pressure (horizontal axis) and power output (vertical axis).

The approximate curve depicted in each graph in FIG. 11 represents a range that includes positions at which the performance of the plant 10 can be evaluated as normal when the operating data is plotted at those positions. In other words, when two items of data from the operating data acquired from the plant 10 are plotted on the graphs in FIG. 11 and the points are located on the approximate curves, the performance of the plant 10 can be evaluated as normal. The region above the solid line depicted in each graph in FIG. 11 is represented by A. The region below the approximate curve is represented by B. The region represented by A corresponds to the region where the operating data is above normal. The region represented by B corresponds to the region where the operating data is below normal.

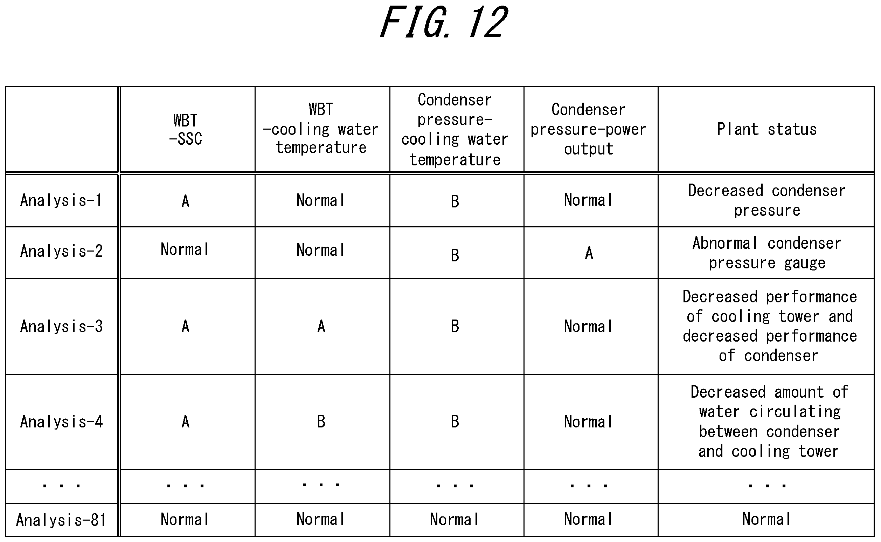

When operating data is plotted on each graph, the detector 112 evaluates whether the data is classified as normal, A, or B. In other words, the detector 112 classifies the operating data as normal, above normal, or below normal for each data set. The detector 112 analyzes the cause that makes the performance of the plant 10 abnormal based on combinations of the classification result for each data set. Specifically, as illustrated in FIG. 12, the detector 112 sets combinations in which each of the four data sets (four graphs) is classified as normal, A, or B. Classifying each of the four data sets into three types yields 81 possible combinations of classification results (i.e., 3 × 3 × 3 × 3). The detector 112 associates the performance of the plant 10 with each of the combinations of classification results.

For example, the row labeled "Analysis-1" in the leftmost cell corresponds to the classification result of the operating data illustrated in FIG. 6. As described above, in a case in which the operating data illustrated in FIG. 6 is obtained from the plant 10, the cause of the abnormality in the plant 10 is estimated to be a decrease in the pressure of the condenser 50. Therefore, the detector 112 associates the row labeled "Analysis-1" with a decrease in condenser pressure as the performance of the plant 10.

The row labeled "Analysis-2" in the leftmost cell corresponds to the classification result of the operating data illustrated in FIG. 7. As described above, in a case in which the operating data illustrated in FIG. 7 is obtained from the plant 10, the cause of the abnormality in the plant 10 is estimated to be an abnormal measured value for the pressure of the condenser 50. Therefore, the detector 112 associates the row labeled "Analysis-2" with an abnormal condenser pressure gauge as the performance of the plant 10.

The row labeled "Analysis-3" in the leftmost cell corresponds to the classification result of the operating data illustrated in FIG. 8. As described above, in a case in which the operating data illustrated in FIG. 8 is obtained from the plant 10, the cause of the abnormality in the plant 10 is estimated to be a decrease in the performance of the cooling tower 60 and the condenser 50. Therefore, the detector 112 associates the row labeled "Analysis-3" with a decrease in the performance of the cooling tower 60 and the condenser 50 as the performance of the plant 10.

The row labeled "Analysis-4" in the leftmost cell corresponds to the classification result of the operating data illustrated in FIG. 9. As described above, in a case in which the operating data illustrated in FIG. 9 is obtained from the plant 10, the cause of the abnormality in the plant 10 is estimated to be an abnormal amount of water circulating between the condenser 50 and the cooling tower 60. Therefore, the detector 112 associates the row labeled "Analysis-4" with a decrease in the amount of water circulating between the condenser 50 and the cooling tower 60 as the performance of the plant 10.

As described above, the detector 112 classifies the operating data for each data set and analyzes the cause that makes the performance of the plant 10 abnormal based on combinations of the classification result for each data set. By advance preparation of a table in which the causes of abnormality of the plant 10 are associated with combinations of classification results, the causes of abnormality of the plant 10 can be analyzed in a simplified manner. Consequently, the load for operations to analyze the cause of abnormality can be reduced. The performance of the plant 10 can also be efficiently managed.

### <Graphical Display of Operating Data>

The detector 112 of the management apparatus 110 evaluates the performance of the plant 10 based on each item of the operating data, as described above, and analyzes the cause of abnormality. The detector 112 may display a graph, on the output interface 114, representing the relationship between a combination of at least a portion of items of data among the operating data used to evaluate the performance of the plant 10. With this configuration, the content of the evaluation and analysis processes executed by the detector 112 can be represented visually for the user. Consequently, the user can accept the evaluation and analysis results with piece of mind.

### <Maintenance Plan for Plant 10>

The detector 112 of the management apparatus 110 may generate a maintenance plan for the plant 10 based on the result of evaluating the performance of the plant 10. The maintenance of the plant 10 is performed at a predetermined timing, such as once a year. Based on the result of evaluating the performance of the plant 10, the detector 112 may determine whether it is necessary to perform maintenance on the plant 10 on an ad hoc basis before the predetermined timing is reached. In a case in which ad hoc maintenance of the plant 10 is determined to be necessary, the detector 112 may generate a maintenance plan for the plant 10.

The detector 112 may estimate losses occurring in the plant 10 based on the result of evaluating the performance of the plant 10. The losses in the plant 10 result from a decrease in the performance of the plant 10, such as a decrease in the output of the plant 10. In a case in which the plant 10 is a geothermal power plant, the losses in the plant 10 result from a decrease in power generation (decrease in power output). The detector 112 may determine that maintenance of the plant 10 on an ad hoc basis is necessary in a case in which the losses caused by the decrease in the output of the plant 10 during the period until the next maintenance are greater than predetermined losses.

The losses at the plant 10 include the opportunity loss caused by shutting down the plant 10 in the case of performing maintenance on an ad hoc basis. The losses in the plant 10 also include the cost of work hours, parts, and the like incurred to perform maintenance on the plant 10. In other words, the losses in the plant 10 include losses resulting from ad hoc maintenance of the plant 10. The detector 112 determines that ad hoc maintenance of the plant 10 is necessary in a case in which the losses that would be caused by not maintaining the plant 10 until the next scheduled maintenance are greater than the losses that would result from ad hoc maintenance of the plant 10. In other words, the detector 112 may generate a maintenance plan for the plant 10 based on the result of estimating losses.

By estimation of the losses in the plant 10, it can be easily determined whether to perform maintenance on the plant 10. Also, by generation of a maintenance plan for the plant 10 based on the result of estimating the losses in the plant 10, excessive costs or workload for maintenance of the plant 10 can be reduced. Consequently, the performance of the plant 10 is efficiently managed.

Although embodiments of the present disclosure have been described through drawings and examples, it is to be noted that various changes and modifications can be made by those skilled in the art on the basis of the present disclosure. Therefore, such changes and modifications are to be understood as included within the scope of the present disclosure. For example, the functions or the like included in the various components or steps may be reordered in any logically consistent way. Furthermore, components or steps may be combined into one or divided.

## Claims

1. A plant performance management method comprising:
a step of evaluating performance of a plant (10) based on a relationship between at least two items of data from operating data; and
a step of analyzing a cause that makes the performance of the plant (10) abnormal based on the operating data in a case in which the performance of the plant (10) is evaluated as abnormal.

2. The plant performance management method according to claim 1, wherein in the step of evaluating the performance of the plant (10), the performance of the plant (10) is evaluated based on change over time in at least one item of data from the operating data.

3. The plant performance management method according to claim 1 or 2, further comprising a step of evaluating whether at least one item of data from the operating data is abnormal in a case in which the performance of the plant (10) is evaluated as normal.

4. The plant performance management method according to any one of claims 1 to 3, wherein in the step of evaluating the performance of the plant (10), the performance of the plant (10) is evaluated based on a relationship among three items of data from the operating data.

5. The plant performance management method according to any one of claims 1 to 4, wherein in the step of analyzing a cause that makes the performance of the plant (10) abnormal, the operating data is classified as normal, above normal, or below normal for each data set among a plurality of data sets including two items of data from the operating data, and the cause that makes the performance of the plant (10) abnormal is analyzed based on a combination of classification results for each data set.

6. The plant performance management method according to any one of claims 1 to 5, further comprising a step of displaying a graph representing a relationship between a combination of at least a portion of items of data from the operating data.

7. The plant performance management method according to any one of claims 1 to 6, further comprising a step of estimating losses occurring in the plant (10) based on analysis results of the cause that makes the performance of the plant (10) abnormal.

8. The plant performance management method according to claim 7, further comprising a step of generating a maintenance plan for the plant (10) based on a result of estimating the losses.

9. A plant performance management apparatus (110) configured to perform the plant performance management method according to any one of claims 1 to 8.

10. A plant performance management program configured to cause a computer to perform the plant performance management method according to any one of claims 1 to 8.
